# EUROPEAN PATENT APPLICATION

(11) **EP 4 491 348 A1**
(43) Date of publication of application: **15.01.2025**
(21) Application number: 24181587.7
(22) Date of filing: 12.06.2024
(51) Int. Cl.: B25J 9/06, B25J 13/02, B25J 18/06

(54) **HAPTIC CONTROL SYSTEM**

(30) Priority: 12.07.2023 GB 202310686
(71) Applicant: Rolls-Royce plc, London N1 9FX (GB)
(72) Inventor: Harrison, Liam D, Derby DE24 8BJ (GB); Laidlaw, Sophie, Derby DE24 8BJ (GB); Martin, Nicholas, Derby DE24 8BJ (GB)
(74) Representative: Rolls-Royce plc

(57) **Abstract**

A system for inserting a flexible robotic arm into a workspace, the system comprising: a feed mechanism having a housing containing a drive mechanism, the drive mechanism gripping the flexible robotic arm using at least one drive wheel which is coupled to a drive motor, the feed mechanism is provided with at least one force sensor; and a haptic controller coupled to the feed mechanism, the haptic controller having input controller for instructing the drive motor within the feed mechanism to activate in response to the signal from the input controller, and wherein the input controller is provided with haptic feedback to provide an operator an indication of the state of operation of the feed mechanism based on signals output from signals provided by the force sensors.

## Description

### FIELD

The invention relates to a system and method for controlling the insertion of a flexible robotic arm into a body. Then system is able to sense the forces being provided by the device to the flexible robotic arm. In particular, the system can provide haptic feedback to an operator on the forces being applied to the flexible robotic arm.

### BACKGROUND

Repair and inspection of complex objects such as gas turbine engines, nuclear power plants, underground cabling, pipes and equipment for oil and gas processing is of growing importance as these industries grow. In these examples there are issues with the ease of access to perform repairs, maintenance and inspection of these systems; this is either because of confined access, dangerous environments or the complexities and cost involved in removing the equipment for the task. To overcome these limitations there has been growing interest in robotic tools and probes that are able to work within these confined and difficult environments. Examples of such flexible robotic arm systems are borescopes and continuum or compliant robots.

The use of robotics, however, is limited as they require skilled operators to control them and to feel and feed them into the component. The use of a skilled operator to feed the flexible robotic arm into the workspace can be challenging in difficult to reach areas, or dangerous environments. Furthermore, the operator has to support the weight as well as feed the flexible robotic arm into the space; this action can place a large amount of strain on the joints of the operator, which can result in injury. Robotic feed tools can be used, but they lack the feel of a human operator, which could potentially result in damage to the flexible robotic arm; this could be costly and could also result in damage to the workspace into which it has been inserted. A knowledge of the forces applied can also be beneficial in surgical applications using flexible robotic arms, where excess application of force could risk injury to the patient.

### SUMMARY

The present invention provide a system and a method as set out in the appended claims.

According to a first aspect there is provided a system for inserting a flexible robotic arm into a workspace, the system comprising: feed mechanism having a housing containing a drive mechanism, the drive mechanism gripping the flexible robotic arm using at least one drive wheel which is coupled to a drive motor, the feed mechanism is provided with force sensors; and a haptic controller is coupled to the feed mechanism, the haptic controller having an input controller for instructing the drive motor within the feed mechanism to activate in response to the signal from the input controller, and wherein the input controller is provided with haptic feedback to provide an operator an indication of the state of operation of the feed mechanism based on signals output from signals provided by the force sensors.

The feed mechanism may also be able to apply rotational movement to the flexible arm robot, the feed mechanism also having a rotational motor whose output is used to rotate the drive mechanism within the housing.

The haptic controller may be provided with a GUI with the output displayed on a screen, the GUI providing information on the state of operation of the feed mechanism.

The feed mechanism may have a PCB within the housing the PCB comprising a motor driver for the feed motor and a motor driver for the twist motor, amplifiers for the force sensors, and a microcontroller.

The controller may have an HMI PCB comprising haptic feedback devices, and at least one microcontroller.

The controller may have provided with a vibration motor, which may be activated once a threshold is reached.

The controller may be provided with a deadman's swich which prevents activation of the system without contact.

The controller may further have at least one control button.

The controller may be able to change the settings for the motors in the feed mechanism.

The operator may be able to change the run program or settings of the feed mechanism using the controller to interact with the GUI.

According to a second aspect there is provided a method for controlling the positioning of a flexible robotic arm within a workspace, the method comprising: switching the system according to the first aspect on, selecting at least one of a configuration, job or operation is selected by the operator, inserting the flexible robotic arm with the insertion controlled by the operator using the haptic controller, and using the haptic controller to retract the robotic arm from the system.

Once the operator has inserted the robotic arm and positioned it, the controller can be locked so that the inspection or the repair task can be performed.

During the insertion or retraction of the robotic arm the operator can vary the speed of the insertion or retraction using the controller.

The retraction step may be a programmed retraction that is selected by the operator.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
FIG. 1 presents a schematic example of the insertion of a flexible robotic arm into a workspace;
FIG. 2 presents a rear perspective view of the feed portion;
FIG. 3 presents a cross sectional view along the longitudinal axis of the feed mechanism;
FIG. 4 presents a schematic of the operation of the feed mechanism output with the haptic feedback;
FIG. 5a presents an example of a controller, and 5b presents an example of the handle of the controller of FIG. 5a;
FIG. 6 presents a flow chart example of usage; and
FIG. 7 presents a schematic of an example of an overall setup of the system.

### DETAILED DESCRIPTION

Aspects and embodiments of the present invention will now be discussed with reference to the accompanying figures. Further aspects and embodiments will be apparent to those skilled in the art.

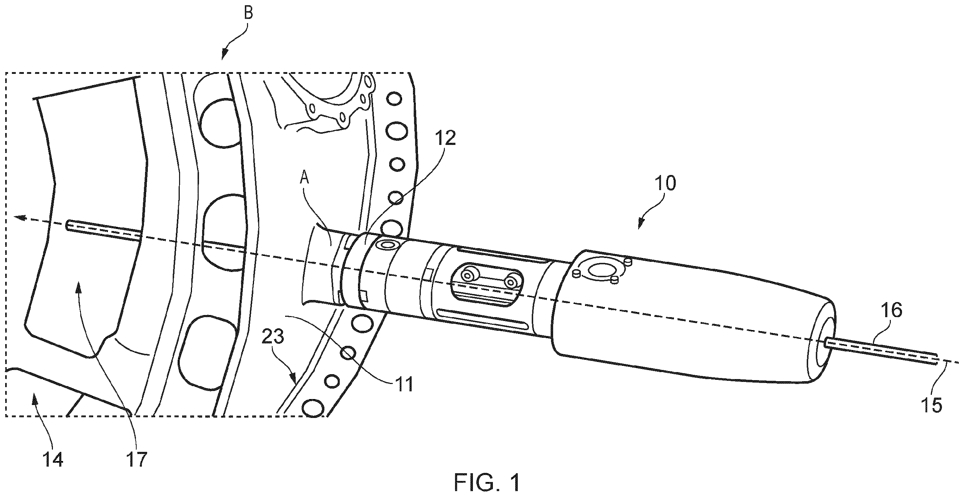

FIG. 1 presents a schematic example of the insertion of a flexible robotic arm into a workspace. The figure shows a feed mechanism 10 for a flexible robotic arm 12 that is mounted in the figure to the casing of a gas turbine engine 11. The flexible robotic arm can be a borescope probe, endoscope, or a continuum robot, compliant or any other hyper redundant robotic arm. The flexible robotic arm can be operated in situ for inspection and/or repair of a component or part. In particular, the feed mechanism is connected to an inspection port 13, which is positioned within the external wall of a nozzle guide vane section 14 of the intermediate pressure compressor. The feed mechanism is connected via screwing into a flange of a threaded portion of the inspection port. A passageway extends through the feed mechanism along its longitudinal axis 15, in the direction indicated. The passageway of the feed mechanism is coaxially aligned with the inspection port 13. Thus, in use, the longitudinal axis of the passageway is coaxially aligned with an aperture A of a body B. Accordingly, the attachment means is configured to coaxially align the longitudinal axis with the aperture A of the body B.

A flexible robotic arm 12 is presented extending along the longitudinal axis of the feed mechanism passageway. The flexible robotic arm can be fed into the passageway of the feed mechanism, and from there through the inspection port and into the gas turbine engine. Thus, in use, when the flexible robotic arm 12 is inserted into the feed mechanism the flexible robotic arm is coaxially aligned with the longitudinal axis 15 of the passageway and an aperture A of a body B. The distal end of the flexible robotic arm 17 is shown in its deployed state within the feed mechanism so that it can be fed into an area of interest within the gas turbine engine as shown.

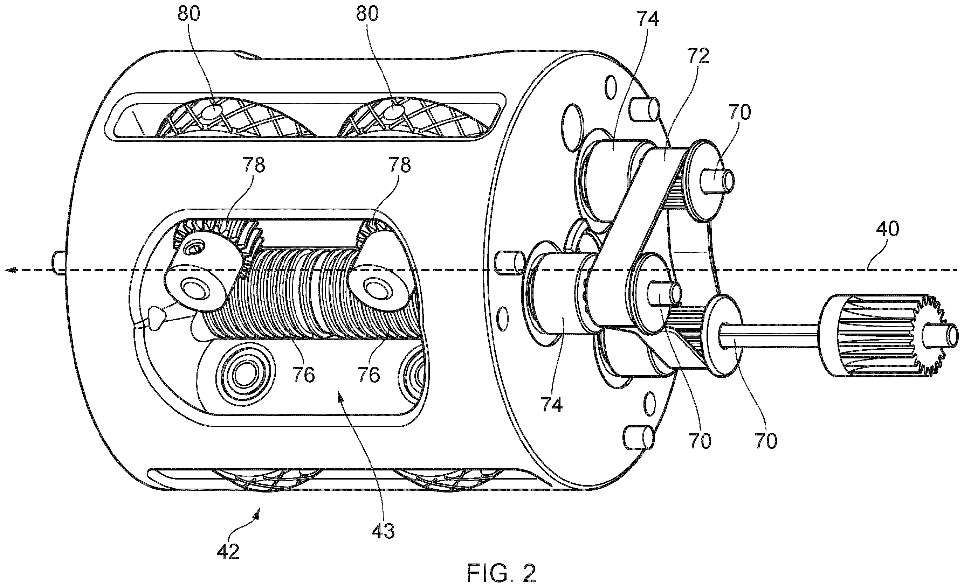

An example of a feed mechanism 20 is presented in FIG. 2. In particular, FIG. 2 presents a rear perspective view of the feed portion. The feed portion comprises a feed actuator 21, which is configured in use, to engage with and to drive the flexible robot arm along the longitudinal axis 22 of the feed mechanism. The feed mechanism, therefore, is configured to drive the flexible robot arm through the feed mechanism and into the desired workspace, which in the case of FIG. 1 was the intermediate compressor of a gas turbine engine. The feed portion comprises one or more feed portions. The feed portions are configured about the passageway that runs through the feed mechanism and is configured to engage with and drive the flexible robotic arm along the passageway. In the example shown the feed actuator comprises three axial feed shafts 23. Each feed shaft is configured about the passageway such that the shafts 23 extend along axes which are parallel to, but radially offset from the longitudinal axis. This radial offset in this example is fixed so that the device is configured so that only a fixed size flexible robot arm can be driven through the feed mechanism. Each feed shaft is configured within roller bearings 24 at either side of the respective shaft and comprises worm gears 25. Each worm gear moves a respective worm wheel 26, wherein the worm wheels are mounted on a worm wheel shaft. The worm wheels are mounted to the worm wheel shaft via a wheel and are supported by two roller bearings 27. Each of the worm wheels drives a wheel 28. A tangent of each wheel at the point of engagement with the flexible robot arm extends parallel to but radially offset to the longitudinal axis. The offset is fixed to the radius of the flexible arm robot. In use the wheels grip the flexible robot arm and rotate in order to drive the flexible robot arm along the longitudinal axis. One of the difficulties with the use of such a system is that it can only be used on a fixed diameter robot. Therefore, in this example if a different diameter robot or probe is required, to perform the desired task, the system requires a separate mechanism to feed the flexible robot arm into the area of interest.

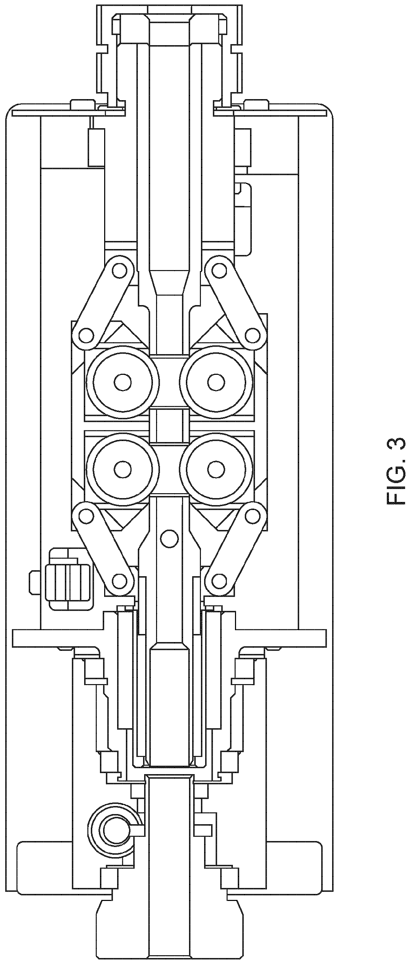

FIG. 3 presents a cross sectional view along the longitudinal axis of an example of a feed mechanism 30. The feed mechanism allows for the passage of a flexible robot arm along a longitudinal axis 31. A passageway is formed in the flexible arm robot, with its centre being along the longitudinal axis. The flexible robotic arm is driven by a plurality of drive wheels 32 that are used to engage with pressure against the flexible robotic arm, so as to add friction to the cable so that it can be moved along the longitudinal axis 31. The drive wheels are driven via a worm gear having a spur reduction. The drive wheels 32 may be coated with polyurethane, or natural or artificial rubber to provide extra grip. The drive wheels 32 may be mounted in pairs. The drive wheels are mounted to a frame that is connected pivotally via a pair of linkage bars 33 to a pair of springs that are aligned to the longitudinal axis. The frame extends longitudinally along part of the length of the mechanism. In order to use different size robot arms the central portion 28a, 28b, and 28c of the feed mechanism can be changed. The screw is then used to keep the core in place and to compress the spring. Due to the spring tension the wheels are forced down against the flexible arm robot; this along with the coating helps to maintain frictional contact with the flexible arm robot. Alternatively, a screw may be employed to provide a means of adjusting the tension of the spring. The presence of the screw adjusts the length of the spring relative to a fixed end. The screw can be controlled by rotation of knob 34. An advantage of this configuration is that the pivotable linkages are able to change their angle so that the radial spacing between the drive wheels 32 and the longitudinal axis 31 is increased. This allows the feed mechanism to take larger diameter flexible arm robots. There may be a single pair of mounted wheels, so that only one side of the feed mechanism expands in the radial direction. However, to allow for a centred feed about the mechanism, two or more pairs of wheels may be mounted in pairs and connected to the springs. Such a configuration also increases the friction that acts between the wheels and the flexible robotic arm. The wheels may be mounted to a carriage. The mounting can be coupled to the linkage pins, so that the wheels move together. The mounting may extend around the wheels and connect to bearings with the wheel axis running through them. There may be four pairs of drive wheels each mounted perpendicular about the longitudinal axis, or alternatively there may be 3 drive wheels orientated at 120° about the longitudinal axis. However, the example shown in FIG. 3 has only two pairs of wheels.

About the longitudinal axis 31 there is a feed core. The feed core comprises a central tube that allows for easy feed of the flexible robotic arm. There is a plurality of cut away sections of the feed core that allow axis for the drive wheels 32, as discussed above, to extend into the feed core. The cut away sections are so sized to allow the drive wheels 32 to move deeper towards the longitudinal axis within the core; this allows the drive wheels to move relative to the size of the flexible robotic arm that is being used. The feed core is shown having a taper; this makes the feeding of the flexible robotic arm easier as it can be fed into the rear of the feed core. The drive mechanism may be coupled to an encoder, so that it is possible to detect any slip in the drive of the flexible robotic arm. Any slip, if undetected, could potentially result in an incorrect determination of the amount of flexible robotic arm that has been inserted into the workspace, which could potentially result in damage of the tool, probe or the flexible robotic arm itself. A light gate may also be used to detect a position of the flexible robotic arm within the mechanism, so that the position and orientation of the flexible robotic arm can be accurately determined.

FIG. 3 also presents the twist mechanism 35 which is positioned at the end of the feed mechanism. The feed mechanism is configured to be at the distal end. That is to say, the end that is closest to the equipment/workspace into which the flexible robot arm is to be inserted. The twist mechanism comprises a worm drive that allows the feed section to rotate within the feed mechanism, thus twisting the flexible robotic arm. All of these features are held within a housing to which the fixed position structural features can be affixed.

The twist feed mechanism is connected to a controller that has the electronic equipment that is required for controlling the twist feed mechanism. The controller may contain a pair of motor drives, a pair of load cell amplifiers, a pair of MCU's and a pair of PCB's that distribute power and communications between these devices and connected components such as the motors, encoders, load cells. The controller there may also house a node/power supply with its power related components such as AC/DC converters, fuses etc. A computer can also be used to connect external control systems or carry out more complex control tasks. The controller in the handset may contain a single board custom PCB. The PCB is connected a pair of resistive haptic feedback scroll wheels, a screen 2, multi-function buttons, a Deadman's switch and a vibration motor.

The drive wheels of the or any of the feed mechanisms presented in FIGS. 1-3 may be connected to sensors that determine the force or pressure that is applied to the flexible robotic arm. The sensors may be loadcells, pressure sensors, or force sensors connected to the shaft, or additionally or alternatively means of monitoring the output from the drive motor, which may be connected to the motor of the feed and/or twist portions. The load cells measure the reaction force of the flexible robotic arm. This reaction force can be passed back to the user though a haptic or force feedback controller. Alternatively, the forces can be displayed on a screen to the user, used for overload protection, or used to detect issues when driving the TFM automatically. This monitoring of the twist and/or the drive motor can be used to monitor the force being applied to the flexible arm robot. One or more of the previously listed options may be used within the feed mechanism on the twist and/or feed portions. The output from these sensors may be converted into a haptic force using haptic actuators.

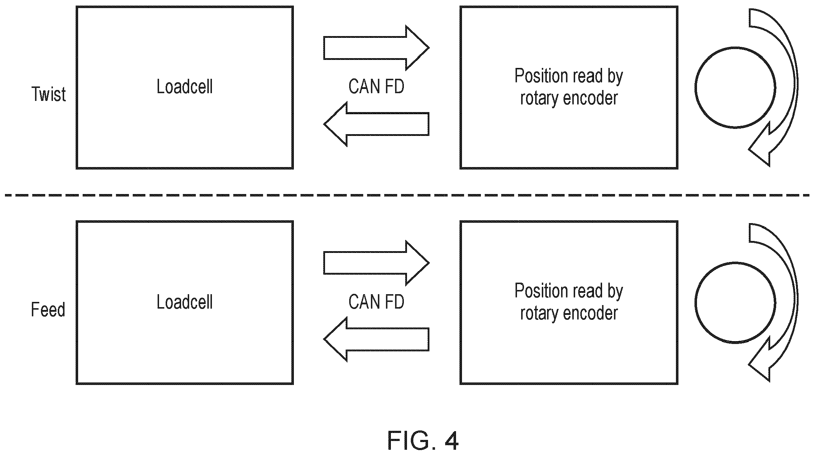

FIG. 4 presents a schematic of the operation of the feed mechanism output with the haptic feedback. As the system is used to pass or twist the flexible robotic arm through the feed mechanism. In this case the feed mechanism is shown having both a twist and feed portion. Such as system is capable of both driving the flexible robotic arm as well as twisting the flexible robotic arm as it passes into the body or workspace. In this case both the twist and feed portions are connected to a force and/or friction sensor 41 and 42 respectively. In the example shown the sensors are loadcells. The load cells are able to provide an output related to the force or strain applied to the system. This signal can be used to determine a value or a scale of the force or strain that is applied to the robotic arm as it is fed through the system. The signals from the load cells can be output 43 to a receiving device using any suitable cabling or transmission means. This can also be done through any suitable transmission protocol. For example, the transmission protocol may be CAN FD. The receiving device for the signals may be a computer, which is capable of displaying the values that are recorded. This may be in addition to or alternative to a device such as a rotary encoder for the twist 44 and the rotary encoder for the feed 45. A haptic controller can be used to process the outputs from the rotary encoder. The haptic controller may be used to set and send the signals to the controller so that they can be sensed by the operator. Such a signal can be for example sent to the scroll wheel, or the joystick that is used by the operator to control the feed mechanism. Based upon the values that are recorded from the loadcells the resistance to the controller can be set. Other types of haptic feedback systems could be used as would be apparent to those skilled in the art. For example, alternative haptic systems may be force feedback, air vortex rings, and/or ultrasound. Signals can be sent back from the twist and feed encoders to the loadcells. The load data may also be recorded along with the motor position. The system may also be set up so that it can rapidly detect events that exceed a set threshold. This may allow the system to detect if there is a slip with the drive motor passing onto the robot. It may also have a limit on the amount of rotation that is placed onto the robotic arm to ensure that there is no over-rotation of the robotic arm. A GUI controller may be used in conjunction with the system. The GUI controller is responsible for selecting the operating parameters of the both the handset and the feed mechanism. This could be through having a plurality of pre-loaded programs provided or having a customisable set up. If it is a customisable set up, it may be possible to change one or more of the following: the settings for the diameter of the flexible robotic arm, the sensitivity of the feedback to the haptic controller, the maximum force that can be applied, the maximum twist that can be applied, the maximum speed of insertion or retraction, what is shown in the display. The GUI may be responsible for the output display of the system.

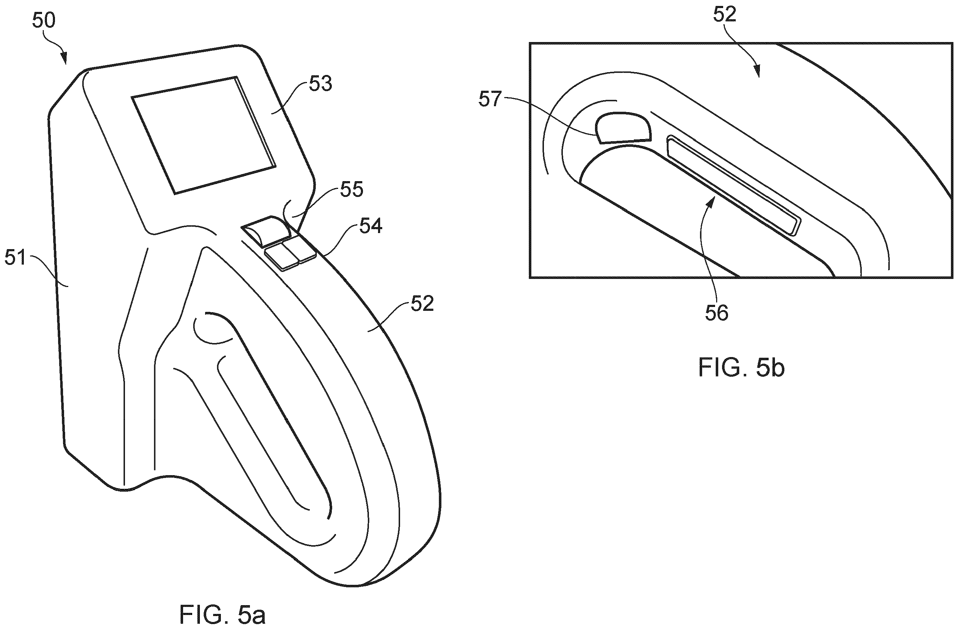

FIG. 5a presents an example of a controller 50 that can be used with the present invention. The controller is shown having a body portion 51. The body portion has a grip section 52 which the operator holds when operating the device. The controller has a display 53, which can display key information relating to the device. The display may show for example the length inserted and the degree of twist, or the forces being applied to the flexible robotic arm. The controller may be provided with multifunction buttons 54 that can change what is displayed, or to allow for different control features of the device. The controller is also shown having a feed scroll wheel 55, which allows the operator to control the amount of robotic arm that is fed into or retracted from the body. The wheel may be replaced by any other suitable function input device. For example, this could be a thumb toggle, analogue stick(s) or small joystick. The wheel, or function input device may be connected to the haptic controls and can provide feedback from the feed mechanism. This can be output to the user by the response from the function input device through the force that is applied to it.

FIG. 5b presents an underside view of the grip section 52 shown in FIG. 5a. This example shows the presence of a deadman's switch 56. The deadman's switch is configured to stop the motion of the device if the switch is not engaged. This acts as a safety feature so that the flexible robotic arm cannot be further fed into the feed mechanism without instruction or is a quick means to stop the feed mechanism if there is an issue with the feed. The grip portion is also shown with a roller wheel 57 similar to that shown in FIG. 5a and allows for input control into the feed mechanism. In this case the roller wheels are offset perpendicular to each other. This allows for one of the controllers to control the forward and backward motion of the device, whilst the other wheel can control the twist motion of the device. The haptics may be interfaced with the control wheels. The application of the haptics may be tunable, so that the feedback can be transmitted to the operator in different ways. For example, the haptics feedback may be constant linear feedback that gradually increases as the force increases. Alternatively, the feedback may be provided in nudges at set force change intervals. The force at which the haptics is activated may also be changeable; this could for example could be dependent upon the environment in which the robotic arm is operating. Another example is that a feedback warning may be given when a clash is detected but this can be driven past, with a larger force return when the force on the probe exceeds a level likely to damage the probe or engine. The controller may also be provided with a vibration motor, which is linked to the output of the sensors. The vibration motor can be scheduled to activate once a threshold had been exceeded. This informs the operator that an error has occurred, so that they have a physical warning or alarm. The housing may be shaped to be ergonomic, so that it is comfortable to hold and that all the buttons and switches are readily accessible to the operator. The haptics controller may be provided with an integrated printed circuit board (PCB). The PCB controls the human machine interface (HMI).

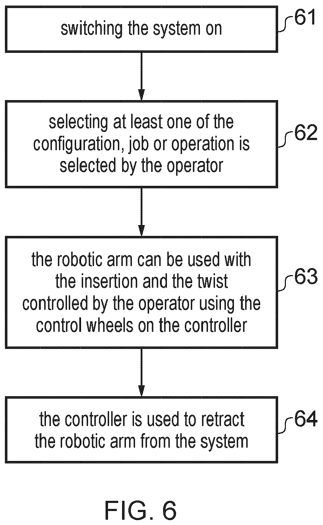

A flow chart example of usage is presented in FIG. 6. In step 61 the system is switched on. This could be done through a central switch that controls all of the equipment separately, or alternatively, each individual piece of equipment can be switched on independently to one another. If it is the latter case, there may be a set switch on order, in order to protect some of the equipment. In step 62 at least one of the configuration, job or operation is selected by the user. This selection can set the threshold for the force sensors, and also the force that can be applied to the robotic arm. It can also set the feedback levels within the haptic controller, and how the feedback is applied. These may be set as an operation or a job task within a folder. These may be pre-programmed so that the operator only needs to select the required job and then is able to perform that operation required. For example, the pre-programmed controls, may set the insertion length for the flexible robotic arm, the amount of twist that can be applied, the force on the motors within the feed and twist portions of the controller, the sensitivity of the haptic feedback and how it is applied to the controller. Such features are desirable because different jobs require different sensitivities and complexity of passage. Also, the settings may be different depending upon the thickness of the flexible robot arm that is employed as well; this could be the forces applied in the drive and the twist motors, as well as the threshold values for the force sensors. The selection may be performed by selecting an option that is pre-programmed into the controller. The selection of the options may be done through using the controller with the buttons and the scroll wheels used to select and confirm the options that chosen. These options can be shown on the display screen, so that the operator can easily move between the two. If the controller does not have a display then the information may be output to any suitable screen - for example, this could be to a computer or to a tablet screen. The system is now set up and in step 63 the flexible robotic arm can be used with the insertion and the twist controlled by the operator using the control wheels on the controller. Information on the position and twist on the flexible robotic arm can be displayed on the screen. Any additional buttons may be used to vary the speed of the insertion or twist, this may be useful during the first stage to get the flexible robotic arm in position, and then slow it down to allow for greater control of the later positioning step. The buttons may also be used to enter submenus within a control program, to allow for changes to setting, or so that certain data may be displayed over other data, thus increasing the functionality of the system. The display may also show any errors that may occur. In addition to this the controller may vibrate if an error is detected or a warning is required. Such warnings could be that the system is nearing one of the maximum values either in twist or insertion, or to indicate that there is slip detected in the feed mechanism. If an error is present a selection may be displayed on the screen. For example, this may be to continue with reduced force, or to retract the flexible robotic arm. Once in position for the task to be performed the controller may be locked, so that it cannot be moved whilst a task is performed. This may be linked to a central system that controls the full operation of an inspection and repair of device. If the flexible robot arm is required in two positions then the controller may be activated so that the flexible robotic arm can be repositioned, and then locked off again. Once the repair or inspection task as been performed the set up may allow it to be retracted from the workspace. In step 64 the controller may be used to retract the flexible robotic arm from the system. This can be done through using the control wheels to engage the motors in reverse, so that the mechanism can be used to retract the robotic arm. A pre-set program may be used for the retraction settings, alternatively, the same settings for the insertion may be used.

An example of the setup for the system includes the flexible robotic arm with its own controllers for controlling the finite movement available within the flexible robotic arm. The controls for this may be separate to the controls for the system, or alternatively, all of the controls may be run from a single computer. However, the system may also just control the feed mechanism and the controller. The feed mechanism has a custom actuator PCB contained within the housing. The actuator PCB contains two motor drives - one for the feed motor and one for the twist motor. The actuator PCB may also have load cell amplifiers that are coupled to the load cells for determining the amount of force that is being applied to the flexible robotic arm in the twist or the feed sections of the feed mechanism. If different sensors are used other amplifiers or alternative circuitry may be used. The feed mechanism also features a microcontroller and has connections to the motors, encoders, external connections and any other features within the feed mechanism. For example, there may be connections to a light gate to determine the position of the robotic arm as it passes through the feed mechanism. The controller has an HMI PCB contained within the housing. The HMI PCB has haptic feedback devices. These haptic feedback devices may be Hapticore coil drivers or equivalent devices as would be apparent to the person skilled in the art. The HMI PCB also has at least one microcontroller. The HMI PCB may also feature a vibration motor driver. The HMI PCB may also feature connections to any display, to the haptic feedback devices, to the buttons and scroll wheels and may feature external connections.

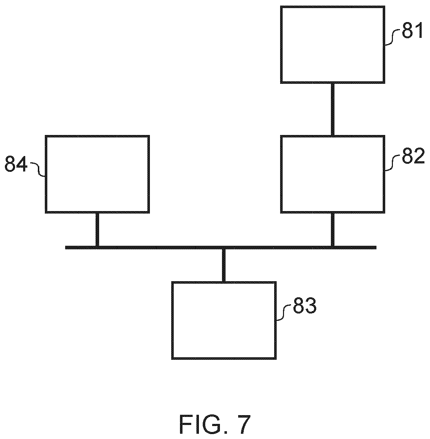

FIG. 7 presents a schematic of an example of an overall setup of the system. A computer 81 is used external to the controller and the feed mechanism to drive the robotic arm. The computer may be an industrial PC or any other suitable computer as would be apparent to a person skilled in the art. The set up also includes a power supply unit. An Interface 82 is provided for the power supply, the computer, the controller and the feed mechanism. The computer uses a Uniform access principle (UAP), which is able to communicate with an "AMPQ" protocol. The industrial PC is used as an interface between the communication bus between the controller 83 and the feed mechanism and the UAP. This allows for a two-way communication system. It also allows for external control of the feed mechanism as well as the reporting of any data that is produced by the controller or the mechanism. The computer may be linked to controller for the flexible robotic arm 84, so that one computer can also control the finite movements of the robotic arm itself. Alternatively, the robotic arm may be controlled by a separate computer. The computer may also link up with any video feed from the robotic arm if present, so when the operator is inserting the robotic arm they can view the environment as they insert the robot into the workspace.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A system for inserting a flexible robotic arm into a workspace, the system comprising:
a feed mechanism having a housing containing a drive mechanism, the drive mechanism gripping the flexible robotic arm using at least one drive wheel which is coupled to a drive motor, the feed mechanism is provided with at least one force sensor; and
a haptic controller coupled to the feed mechanism, the haptic controller having input controller for instructing the drive motor within the feed mechanism to activate in response to the signal from the input controller, and wherein the input controller is provided with haptic feedback to provide an operator an indication of the state of operation of the feed mechanism based on signals output from signals provided by the force sensors.

2. The system of claim 1, wherein the feed mechanism is also able to apply rotational movement to the flexible arm robot, the feed mechanism also having a rotational motor whose output is used to rotate the drive mechanism within the housing.

3. The system of claim 1 or 2, wherein the haptic controller is provided with a GUI with the output displayed on a screen, the GUI providing information on the state of operation of the feed mechanism.

4. The system of any preceding claim, wherein input parameters can be set in the GUI, the parameters may include one or more of: speed of movement of the flexible device into the environment, sensitivity of the haptic response.

5. The system of any preceding claim, wherein the force sensors can be zeroed to eradicate any influence of the external environment including the weight of the inspection device inserted into the system.

6. The system of any preceding claim, wherein the feed mechanism has a PCB within the housing the PCB comprising a motor driver for the feed motor and a motor driver for the twist motor, amplifiers for the force sensors, and a microcontroller.

7. The system of any preceding claim, wherein the controller has an HMI PCB comprising haptic feedback devices, and at least one microcontroller.

8. The system of any preceding claim, wherein the haptic controller is provided with a vibration motor, which may be activated once a threshold is reached.

9. The system of any preceding claim, wherein the controller is provided with a deadman's swich which prevents activation of the system without contact.

10. The system of any preceding claim, wherein the controller further has at least one control button.

11. The system of any preceding claim, wherein the flexible robotic arm is one of a continuum arm robot, a borescope, hyper redundant robot arm, or endoscope for in-situ inspection and/or repair.

12. A method for controlling the positioning of a flexible robotic arm within a workspace using the system of any preceding claim, the method comprising the steps of:
switching the system of any preceding of claim on;
selecting at least one of a configuration, job or operation is selected by the operator;
inserting the flexible robotic arm with the insertion controlled by the operator using the haptic controller; and
using the haptic controller to retract the robotic arm from the system.

13. The method of claim 12, wherein once the operator has inserted the robotic arm and positioned it, the controller can be locked so that the inspection or the repair task can be performed.

14. The method of claim 12 or 13, wherein during the insertion or retraction of the robotic arm the operator can vary the speed of the insertion or retraction using the controller.

15. The method of any one of claims 12 to 14, wherein the retraction step is a programmed retraction that is selected by the operator.
